# EUROPEAN PATENT APPLICATION

(11) **EP 1 862 439 A1**
(43) Date of publication of application: **05.12.2007**
(21) Application number: 06425374.3
(22) Date of filing: 31.05.2006
(51) Int. Cl.: C04B 41/00, C04B 41/50, C04B 41/49

(54) **A process for rendering a slate object inert with respect to atmospheric agents**

(71) Applicant: Ravazzini, Alberto, 41028 Serramazzoni (Modena) (IT); Serantes Miguel, Fernando, 40006 Segovia (ES); Cobo Arias, Victor, 32300 Barco de Valdeorras (ES)
(72) Inventor: Ravazzini, Alberto, 41028 Serramazzoni (Modena) (IT)
(74) Representative: Gotra, Stefano

(57) **Abstract**

The process comprises a stage of heating a slate object to a temperature which is sufficient to determine a surface calcination of pyrite contained within the slate the object is made of.

## Description

The invention preferably relates to slabs made of slate and how to make them inert in the presence of atmospheric agents.

As is known, slate, also known as Pizarra slate, is normally used in slim slabs, of a thickness comprised between about 2 to 4 millimetres, and is used for external coverings.

Slate generally contains pyrite (iron sulphate) particles, which following prolonged exposure to the weather develop an acid reaction. This reaction has a deteriorating effect on the slate, leading in some cases to perforation thereof. This is a totally unacceptable drawback, especially where the slabs are used for covering the outside of buildings. Perforation of a slab used to cover a roof means, in effect, replacing it later to prevent infiltrations of damp into the underlying structure.

The main aim of the present invention is to provide a process which renders a slate object inert in the presence of atmospheric agents. This aim is attained by the process of the appended first claim.

An advantage of the present process is that it is particularly effective. A further advantage of the process is that it is applicable to slate objects, especially slab-shaped objects exhibiting various thicknesses and containing various quantities of pyrites.

Further characteristics and advantages of the process will better emerge from the detailed description made herein below.

The process of the invention comprises a stage of heating the object to a temperature which is sufficient to determine a surface calcination of the pyrites contained in the slate. The heating of the object brings it to a temperature preferably comprised between 500°C and 600°C. At these temperature levels the surface calcination process of the pyrites begins. The lower the temperature to which the object is heated, the greater is the time needed to complete the calcination process of the pyrites, and the lower are the risks of damaging the object by overheating, as slate is not particularly resistant to high temperatures. The object should be heated for around 30 minutes, which corresponds approximately to a temperature increase of between about 16-19°C a minute.

The temperature of the object is maintained at a level comprised between 500°C and 600°C for a time that varies according to the thickness of the object, up to a maximum of about 10 minutes.

At the end of the heating stage and the calcination stage, at least the pyrites in the surface zone of the object have been rendered inert with respect to atmospheric agents. With the aim of not subjecting the slate to excessive heat stress, the heating of the object is mostly directed at the surface areas of the slate object. This means that the pyrites contained in the zones of the object that are more distant from the surface do not heat sufficiently to be sure of calcinating, and if these zones were to come into contact with atmospheric agents or humidity or water, they might develop the harmful acid reaction.

To prevent the pyrites which are more distant from the object's surface from coming into contact with atmospheric agents, and in particular with water, the process comprises, following the heating stage, a stage of spreading a coating containing a silicone liquid on the surface of the object. The coat containing the silicone liquid has the function of waterproofing the object.

The application of this coating of silicone liquid on the object is preferably done at a temperature of about 150°C. At this temperature, the slate pores are sufficiently dilated to enable a good degree of absorption of the silicone liquid, without the liquid undergoing any important heat alterations. Laying this coat of silicone liquid is preferably done when the object reaches a temperature of approximately 150°C during the cooling process from the heating temperature reached previously for the surface pyrites treatment.

If it is desired to waterproof the object more effectively, the process comprises, previous to the heating stage, a stage of laying a coating containing a vitreous compound on the object surface. This vitreous compound can be constituted for example by a vitreous glaze, which can be transparent or coloured. In the latter case, the coating/glaze also has a decorative function. To increase hardness, the coating containing the vitreous compound also contains micronised corundum.

Following the laying of the vitreous compound coating, and if used the micronised corundum, the object is subjected to the heating stage. At the heating temperature, which as mentioned is approximately comprised between 500°C and 600°C, the two processes of surface calcination of the pyrite and the vitrification of the vitreous compound take place virtually contemporaneously. The vitrification of the vitreous compound guarantees an almost perfect waterproofing of the zones of the object that are most distant from the surface, as well as guaranteeing a very high degree of hardness and an opaque appearance typical of the natural product. Laying the coating of silicone liquid is, in this case, no longer necessary.

## Claims

1. A process for rendering a slate object inert with respect to atmospheric agents, **characterised in that** it comprises a stage of heating the object to a temperature which is sufficient to determine a surface calcination of pyrite contained within the slate the object is made of.

2. The process of claim 1, wherein the stage of heating the object brings a temperature of the object to a level comprised between 500 and 600°C.

3. The process of claim 2, wherein the temperature of the object is maintained at the level comprised between 500°C and 600°C for a maximum time of ten minutes.

4. The process of at least one of the preceding claims, comprising a stage of laying a coat containing a silicone liquid on the surface of the object following the stage of heating.

5. The process of claim 4, wherein the stage of laying a coating containing a silicone liquid on the surface of the object is performed at a temperature of about 150°C.

6. The process of at least one of the claims from 1 to 3, comprising a stage of laying a coating containing a vitreous compound on the surface of the object before the stage of heating the object.

7. The process of claim 6, wherein the coating containing a vitreous compound is transparent.

8. The process of claim 6, wherein the coating containing a vitreous compound is coloured.

9. The process of any one of claims from 6 to 8, wherein the coating containing a vitreous compound also contains micronised corundum.
